# EUROPEAN PATENT SPECIFICATION

(11) **EP 4 459 856 B1**
(45) Date of publication and mention of the grant of the patent: **24.12.2025**
(21) Application number: 23772741.7
(22) Date of filing: 20.04.2023
(51) Int. Cl.: H02M 3/158, H02M 1/00, H02M 1/32, H02M 1/36

(54) **BOOST CIRCUIT STRUCTURE, INVERTER APPARATUS, AND PHOTOVOLTAIC POWER GENERATION SYSTEM**
VERSTÄRKERSCHALTUNGSSTRUKTUR, WECHSELRICHTERGERÄT UND FOTOVOLTAISCHES STROMERZEUGUNGSSYSTEM
STRUCTURE DE CIRCUIT D'AMPLIFICATION, APPAREIL ONDULEUR ET SYSTÈME DE PRODUCTION D'ÉNERGIE PHOTOVOLTAÏQUE

(30) Priority: 23.02.2023 CN 202310157229
(43) Date of publication of application: 06.11.2024
(73) Proprietor: Sineng Electric Co., Ltd., Wuxi, Jiangsu 214174 (CN)
(72) Inventor: YUAN, Hong, Wuxi, Jiangsu 214174 (CN); LUO, Jie, Wuxi, Jiangsu 214174 (CN); ZHAO, Long, Wuxi, Jiangsu 214174 (CN); ZHU, Qiang, Wuxi, Jiangsu 214174 (CN); CHEN, Zheng, Wuxi, Jiangsu 214174 (CN)
(74) Representative: Bayramoglu et al.
(86) International application number: PCT/CN2023/089473
(87) International publication number: WO 2024/174369

(56) References cited:
- EP-A1- 3 855 612
- WO-A1-2021/047154
- CN-A- 108 847 769
- CN-A- 109 756 115
- CN-A- 111 245 220
- CN-A- 112 701 913
- CN-A- 112 821 761
- CN-A- 112 821 761
- CN-A- 113 098 253
- CN-A- 113 765 380
- CN-U- 212 381 111
- CN-U- 212 909 346
- US-A1- 2013 021 011
- US-A1- 2020 328 674
- US-A1- 2022 376 616

## Description

### TECHNICAL FIELD

This application pertains to the field of electronic circuit technologies, and in particular, to a boost circuit structure, and a photovoltaic power generation system.

### BACKGROUND

In a flying capacitor boost circuit, when a topology is initially powered on, because the flying capacitor has no voltage, another device is prone to being damaged due to an overvoltage. As shown in FIG. 1, a conventional boost circuit includes an inductor L1, a switch T1, a switch T2, a diode D1, a diode D2, and a flying capacitor C1. When an input side Cin is powered on, if the flying capacitor C1 has no voltage, a voltage of the switch T2 is excessively high. When boost circuits are connected in parallel for use, and when another circuit is first powered on or a subsequent circuit first powers on an output side Cout, because the flying capacitor C1 has no voltage, an overvoltage is prone to being caused to the diode D2. In a photovoltaic application case, in a process in which a switch on a PV (Photovoltaic) side is closed or a bus is powered on, an overvoltage case of a device is particularly severe.

In some existing solutions, a flying capacitor loop is disconnected by an active device, a device voltage is clamped to a corresponding capacitor voltage, and a power-on/off sequence is limited. However, when the active device is used to disconnect a corresponding loop, the loop is closed when a topology normally operates. Consequently, an overall running loss is increased, and more control resources and costs are increased. Clamping of a corresponding device to the corresponding capacitor voltage needs to be implemented by performing corresponding voltage division on a bus by using a capacitor or performing capacitor voltage division on an entire bus. This increases system costs and increases system coupling degree. A power-on/off sequence of a circuit is controlled by using a peripheral circuit or based on an operation sequence. Before a main topology is powered on, a flying capacitor is precharged. This increases control logic and system complexity.

EP 3855612A1 discloses a multilevel boost circuit, a device and a system thereof. A transient voltage suppressor is arranged between the output node, the first capacitor and the second diode. in combination with other auxiliary devices, the novel circuit not only solves the problem that the lower-arm switch is easily broken down at the power-on moment, but also solves the problem of breakdown of the second diode in the case of low input voltage, so that it is easier to select the related devices and reduce costs. Moreover, after introducing the corresponding devices, the normal boost process of the circuit is not affected, the voltage of the output end is easily controlled, and the probability of electric shocks is also reduced when operating the input end.

### SUMMARY

This application provides a boost circuit structure, to resolve a problem that system costs, running costs, and control logic and system complexity of an existing flying capacitor boost circuit are high, and a photovoltaic power generation system comprising thereof, as provided in the appended claims.

Beneficial effects of this application are as follows: In this application, a boost circuit structure frame is formed by the switch circuit, the main boost circuit, and the branch boost circuit, and then the first functional circuit is connected to the flying capacitor and the second input terminal, to charge the flying capacitor in a process of powering on the input side of the boost circuit, thereby protecting the second controllable switch from an overvoltage. In addition, the second functional circuit is connected to the second diode in parallel, to charge the flying capacitor in a process of powering on the output side of the boost circuit, thereby protecting the second diode from an overvoltage.

### BRIEF DESCRIPTION OF THE DRAWINGS

FIG. 1 is a schematic diagram of a circuit structure being an example useful for understanding the invention;
FIG. 2 is a schematic diagram of a circuit module according to an embodiment of a boost circuit structure provided in this application;
FIG. 3 is a schematic diagram of a circuit module according to another embodiment of a boost circuit structure provided in this application;
FIG. 4 is a schematic diagram of a circuit structure being an example useful for understanding the invention;
FIG. 5 is a schematic diagram of a circuit structure being an example useful for understanding the invention;
FIG. 6 is a schematic diagram of a circuit structure being an example useful for understanding the invention;
FIG. 7 is a schematic diagram of a circuit structure being an example useful for understanding the invention;
FIG. 8 is a schematic diagram of a circuit structure according to another embodiment of a boost circuit structure provided in this application;
FIG. 9 is a schematic diagram of a circuit structure according to another embodiment of the circuit structure shown in FIG. 8;
FIG. 10 is a schematic diagram of a current direction according to an embodiment of a boost circuit structure provided in this application;
FIG. 11 is a schematic diagram of a current direction according to another embodiment of the circuit structure shown in FIG. 8;
FIG. 12 is a schematic diagram of a current direction according to another embodiment of a boost circuit structure provided in this application;
FIG. 13 is a schematic diagram of a current direction according to another embodiment of the circuit structure shown in FIG. 12;
FIG. 14 is a schematic diagram of a current direction according to yet another embodiment of a boost circuit structure provided in this application; and
FIG. 15 is a schematic diagram of a current direction according to another embodiment of the circuit structure shown in FIG. 14.

### DETAILED DESCRIPTION OF THE EMBODIMENTS

To make the objectives, technical solutions, and advantages of this application clearer, the following further describes this application in detail with reference to the accompanying drawings and embodiments. It should be understood that the specific embodiments described herein are merely intended to explain this application, and are not intended to limit this application.

In the embodiments of this application, a boost circuit structure frame is formed by a switch circuit, a main boost circuit, and a branch boost circuit, and then the first functional circuit is connected to a flying capacitor and a second input terminal, to charge the flying capacitor in a process of powering on an input side of the boost circuit, thereby protecting a second controllable switch from an overvoltage. In addition, a second functional circuit is connected to a second diode in parallel, to charge the flying capacitor in a process of powering on an output side of the boost circuit, thereby protecting the second diode from an overvoltage.

### Embodiment 1

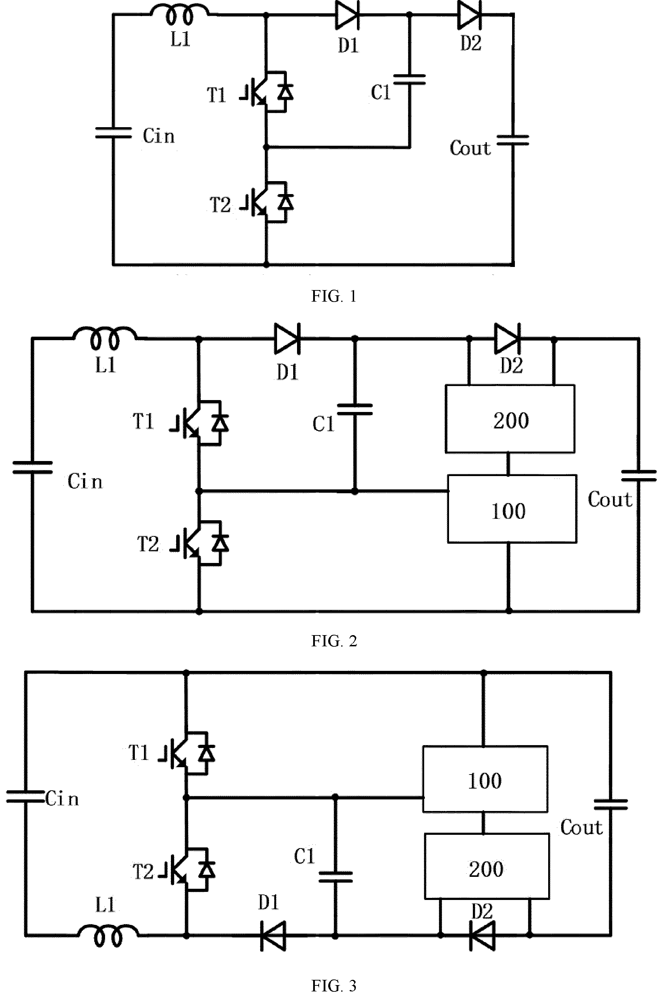

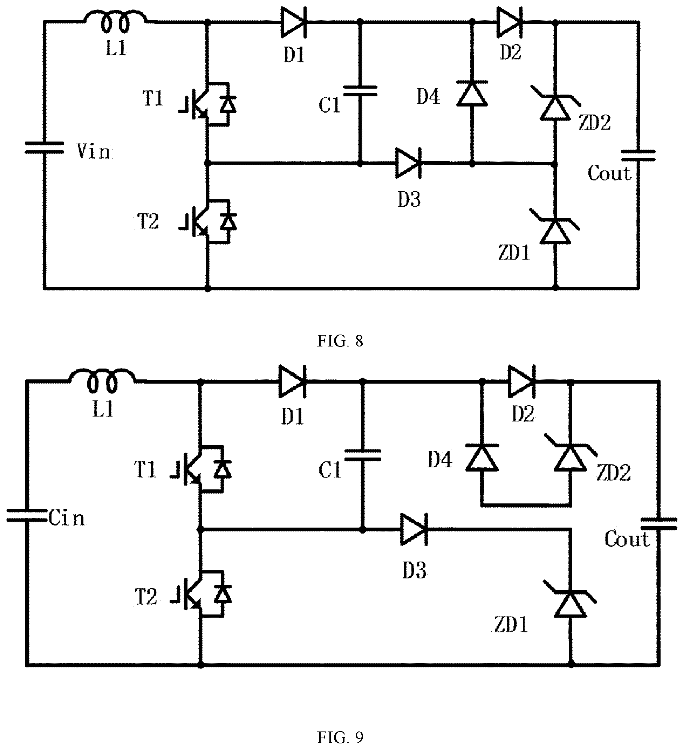

As shown in Fig. 2, 3, 8 - 15 this embodiment provides a boost circuit structure according to claim 1.

In an implementation, the first controllable switch T1 and the second controllable switch T2 may be power switching transistors. For example, the first controllable switch T1 is a first MOS transistor, and the second controllable switch T2 is a second MOS transistor. A drain of the first MOS transistor is connected to one terminal of the inductor L1, a source of the first MOS transistor is connected to a drain of the second MOS transistor, a source of the second MOS transistor is connected to the second input terminal of the boost circuit and the second output terminal of the boost circuit, and the other terminal of the inductor L1 is connected to the first input terminal of the boost circuit.

In some other embodiments, the first input terminal and the second input terminal of the boost circuit are two terminals on the input side Cin of the boost circuit. For example, the input side Cin of the boost circuit includes a positive input and a negative input, where when the first input terminal is the positive input, the second input terminal is the negative input; and when the first input terminal is the negative input, the second input terminal is the positive terminal.

In some other embodiments, the anode of the first diode D1 is connected to the drain of the first MOS transistor, the cathode of the first diode D1 is connected to the anode of the second diode D2, and the cathode of the second diode D2 is connected to the first output terminal of the boost circuit.

In some other embodiments, the first output terminal and the second output terminal of the boost circuit are two terminals on the output side Cout of the boost circuit. For example, the output side Cout of the boost circuit includes a positive output and a negative output, where when the first output terminal is the positive output, the second output terminal is the negative output; and when the first output terminal is the negative output, the second output terminal is the positive output.

In some other embodiments, one terminal of the flying capacitor C1 is connected to the source of the first MOS transistor, that is, one terminal of the flying capacitor C1 is connected to a line between the first MOS transistor and the second MOS transistor. The other terminal of the flying capacitor C1 is connected to the cathode of the first diode D1, that is, the other terminal of the flying capacitor C1 is connected to a line between the first diode D1 and the second diode D2.

In some other embodiments, the first functional circuit 100 is connected to one terminal of the flying capacitor C1 and the second input terminal. In some possible embodiments, the first functional circuit 100 may be a passive device or an active device that is configured to charge the flying capacitor C1 in a process of powering on the input side Cin, to protect the second controllable switch T2 from an overvoltage.

In some other embodiments, the second functional circuit 200 is connected to the second diode D2 in parallel. In some possible embodiments, the second functional circuit 200 may be a passive device or an active device that is configured to charge the flying capacitor C1 in a process of powering on the output side Cout, to protect the second diode D2 from an overvoltage.

In Fig.3, a boost circuit structure frame is formed by the switch circuit, the main boost circuit, and the branch boost circuit, and then the first functional circuit 100 is connected to the flying capacitor C1 and the second input terminal, to charge the flying capacitor C1 in the process of powering on the input side of the boost circuit, thereby protecting the second controllable switch T2 from the overvoltage. In addition, the second functional circuit 200 is connected to the second diode D2 in parallel, to charge the flying capacitor C1 in the process of powering on the output side of the boost circuit, thereby protecting the second diode D2 from the overvoltage.

### Example 2

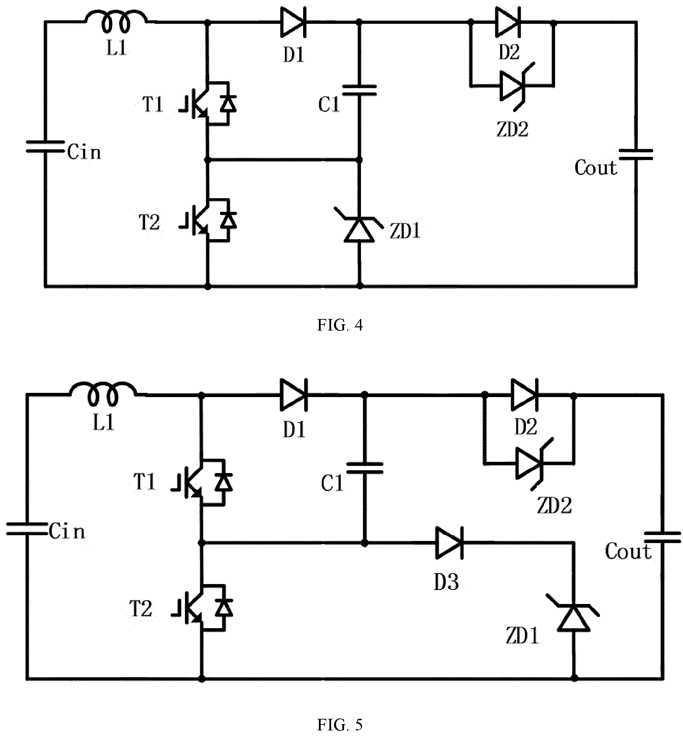

As shown in FIG. 4, the first functional circuit 100 includes a first Zener diode ZD1.

A cathode of the first Zener diode ZD1 is connected to one terminal of the flying capacitor C1, and an anode of the first Zener diode ZD1 is connected to the second input terminal.

The second functional circuit 200 includes a second Zener diode ZD2.

An anode of the second Zener diode ZD2 is connected to the anode of the second diode D2, and a cathode of the second Zener diode ZD2 is connected to the cathode of the second diode D2.

In an implementation, when the input side Cin is powered on, a voltage of the flying capacitor C1 is 0. The input side Cin forms a loop by using the inductor L1, the first diode D1, the flying capacitor C1, and the first Zener diode ZD1, to charge the flying capacitor C1. In a breakdown discharge process of the first Zener diode ZD1, a voltage of the second controllable switch T2 may be clamped to a preset voltage, to prevent the second controllable switch T2 from being damaged due to the overvoltage. A power of the first Zener diode ZD1 is associated with a capacitance of the flying capacitor C1.

In some other embodiments, when the output side Cout is powered on, the voltage of the flying capacitor C1 is 0. The output side Cout forms a loop by using the second Zener diode ZD2, the flying capacitor C1, an antiparallel diode of the first controllable switch T1, and the inductor L1, to charge the flying capacitor C1. In a breakdown discharge process of the second Zener diode ZD2, a voltage of the second diode D2 may be clamped to a preset voltage, to prevent the second diode D2 from being damaged due to the overvoltage. A power of the second Zener diode ZD2 is associated with the capacitance of the flying capacitor C1.

### Example 3

In FIG. 5, the first functional circuit 100 further includes a third diode D3.

The cathode of the first Zener diode ZD1 is connected to a cathode of the third diode D3, and is connected to one terminal of the flying capacitor C1 by using the third diode D3.

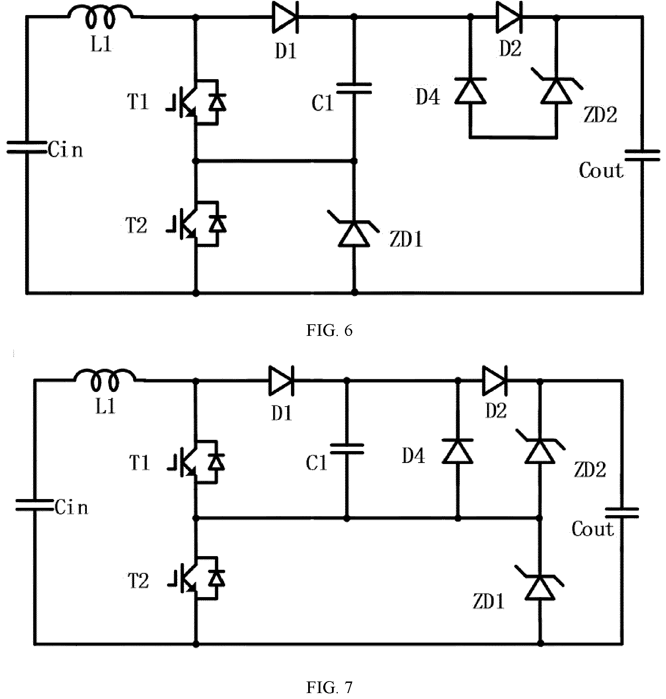

As shown in FIG. 6, FIG. 7, FIG. 8, and FIG. 9, the second functional circuit 200 further includes a fourth diode D4.

The anode of the second Zener diode ZD2 is connected to an anode of the fourth diode D4, and is connected to the anode of the second diode D2 by using the fourth diode D4.

In an implementation, the third diode D3 and the fourth diode D4 may be clamping diodes, and the first Zener diode ZD1 and the second Zener diode ZD2 are transient voltage suppression TVS diodes, voltage regulator diodes, or other similar discharge devices. This is not limited herein.

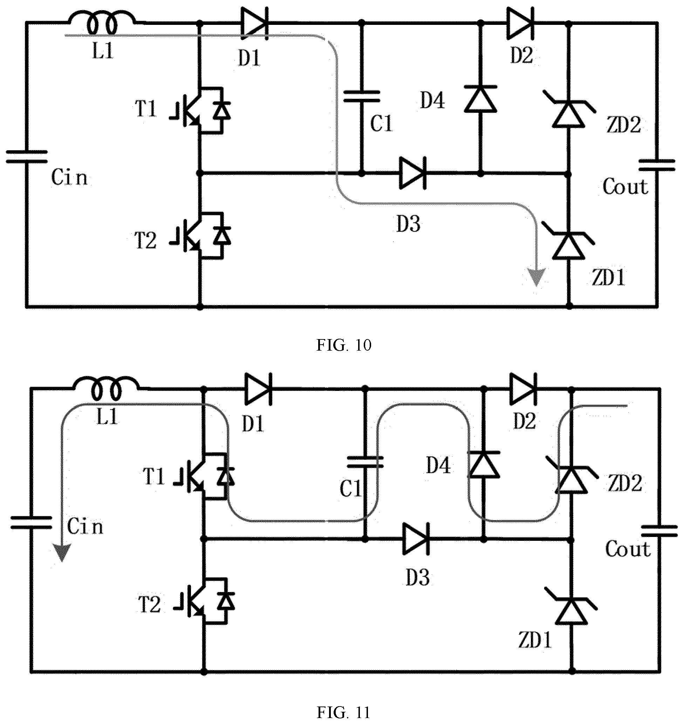

In an implementation, when the input side Cin is powered on, the voltage of the flying capacitor C1 is 0. As shown in FIG. 10, the input side Cin forms a loop by using the inductor L1, the first diode D1, the flying capacitor C1, the third diode D3, and the first Zener diode ZD1, to charge the flying capacitor C1. In the breakdown discharge process of the first Zener diode ZD1, the voltage of the second controllable switch T2 may be clamped to the preset voltage, to prevent the second controllable switch T2 from being damaged due to the overvoltage. The power of the first Zener diode ZD1 is associated with the capacitance of the flying capacitor C1.

In some other embodiments, when the output side Cout is powered on, the voltage of the flying capacitor C1 is 0. As shown in FIG. 11, the output side Cout forms a loop by using the second Zener diode ZD2, the fourth diode D4, the flying capacitor C1, the antiparallel diode of the first controllable switch T1, and the inductor L1, to charge the flying capacitor C1. In the breakdown discharge process of the second Zener diode ZD2, the voltage of the second diode D2 may be clamped to the preset voltage, to prevent the second diode D2 from being damaged due to the overvoltage. The power of the second Zener diode ZD2 is associated with the capacitance of the flying capacitor C1.

Use of passive devices such as a discharge clamp may reduce use of a capacitor, simplifies an operation state of a topology, and reduce system costs.

### Embodiment 4

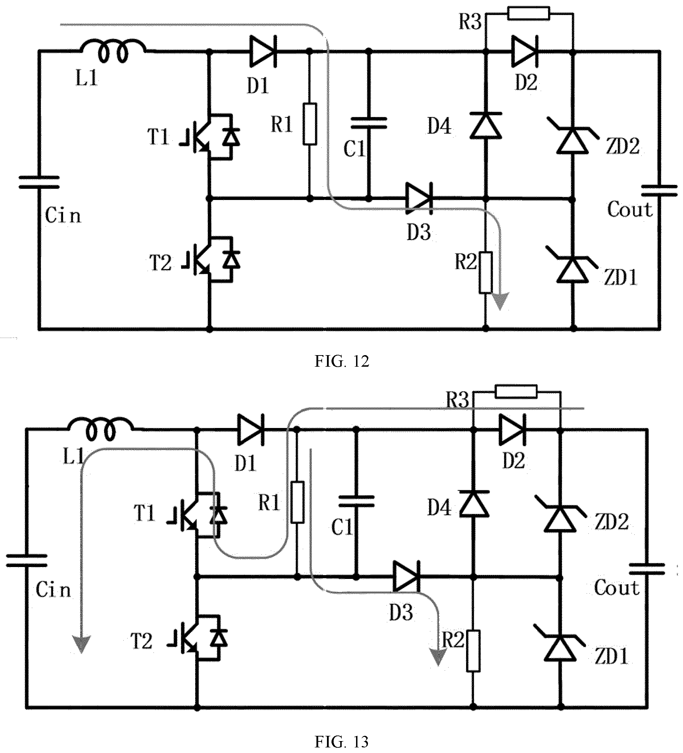

In some optional embodiments, as shown in FIG. 12 and FIG. 13, the branch boost circuit further includes a first resistor R1, and the first functional circuit 100 further includes a second resistor R2.

The first resistor R1 is connected to the flying capacitor C1 in parallel.

The second resistor R2 is connected to the first Zener diode ZD1 in parallel.

In some other embodiments, the second functional circuit 200 further includes a third resistor R3, and the third resistor R3 is connected to the second diode ZD2 in parallel.

In an implementation, secondary precharging may be completed through impedance voltage division in a secondary precharging process of the flying capacitor C1. In the impedance voltage division-based secondary precharging process, system complexity can be reduced. As shown in FIG. 12, in the process of powering on the input side Cin, voltage division is performed on the first resistor R1 and the second resistor R2, a loop is formed by the inductor L1, the first diode D1, the first resistor R1, the third diode D3, and the second resistor R2, to charge the voltage of the flying capacitor C1 to a preset voltage.

In some other embodiments, when a voltage on the input side Cin is low, the voltage of the flying capacitor C1 is low, and a voltage on the output side Cout is high, secondary precharging of the flying capacitor C1 needs to be completed by using energy on the output side Cout. As shown in FIG. 13, one loop is formed by the third resistor R3, the first resistor R1, the antiparallel diode of the first controllable switch T1, the inductor L1, and the input side Cin and one loop is formed by the third resistor R3, the first resistor R1, the third diode D3, and the second resistor R2, to charge the voltage of the flying capacitor C1 to the preset voltage.

### Embodiment 5

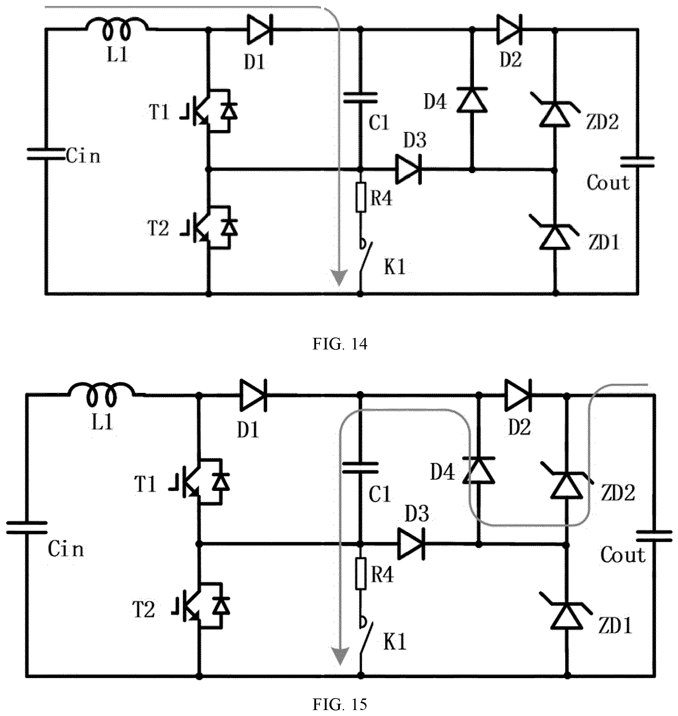

In some optional embodiments, as shown in FIG. 14 and FIG. 15, the branch boost circuit further includes a fourth resistor R4 and a switch K1. One terminal of the switch K1 is connected to one terminal of the flying capacitor C1 by using the fourth resistor R4, and the other terminal of the switch K1 is connected to the second input terminal.

In an implementation, because impedance voltage division-based secondary precharging starts slowly, in the secondary precharging process of the flying capacitor C1, secondary precharging may be completed by using an active device, namely, the switch K1. As shown in FIG. 14, in the process of powering on the input side Cin, the voltage of the flying capacitor C1 is charged to the preset voltage by using a loop formed by the inductor L1, the first diode D1, the flying capacitor C1, the fourth resistor R4, and the switch K1. When the voltage on the output side Cout is high, as shown in FIG. 15, the voltage of the flying capacitor C1 may be charged to the preset voltage by using a loop formed by the second Zener diode ZD2, the fourth diode D4, the flying capacitor C1, the fourth resistor R4, and the switch K1. After the voltage of the flying capacitor C1 reaches the preset voltage, the switch K1 is disconnected from the main circuit.

It should be noted that the functional unit devices in the foregoing circuit do not participate in operation in a normal operation process of the topology, and perform an action only in a power-on process or in an abnormal operation process of the circuit. Therefore, an operation status of the circuit and system heat are not affected.

It can be clearly understood by a person skilled in the art that, for ease of brief description, for a structure and an implementation principle of the foregoing photovoltaic power generation system, refer to corresponding structure and implementation principle in the foregoing Embodiments 1 to 6. Details are not described herein again.

## Claims

1. A boost circuit structure, **characterized by** comprising:
a switch circuit, comprising a first controllable switch (T1) and a second controllable switch (T2) that are connected in series, wherein one terminal of the first controllable switch (T1) is connected to a first input terminal of a boost circuit by using an inductor (L1), the other terminal of the first controllable switch (T1) is connected to one terminal of the second controllable switch (T2), and the other terminal of the second controllable switch (T2) is connected to a second input terminal of the boost circuit and a second output terminal of the boost circuit;
a main boost circuit, comprising a first diode (D1) and a second diode (D2), wherein an anode of the first diode (D1) is connected to the one terminal of the first controllable switch (T1), a cathode of the first diode (D1) is connected to an anode of the second diode (D2), and a cathode of the second diode (D2) is connected to a first output terminal of the boost circuit;
a branch boost circuit, comprising a flying capacitor (C1), wherein one terminal of the flying capacitor (C1) is connected to the other terminal of the first controllable switch (T1), and the other terminal of the flying capacitor (C1) is connected to the cathode of the first diode (D1);
a first functional circuit (100), connected to the flying capacitor (C1) and the second input terminal, and configured to charge the flying capacitor (C1) when an input side of the boost circuit is powered on; and
a second functional circuit (200), connected to the first functional circuit (100) and connected to the second diode (D2) in parallel, and configured to charge the flying capacitor (C1) when an output side of the boost circuit is powered on, wherein
the first functional circuit (100) comprises a first Zener diode (ZD1) and a third diode (D3);
a cathode of the first Zener diode (ZD1) is connected to a cathode of the third diode (D3), and is connected to the one terminal of the flying capacitor (C1) by using the third diode (D3), and an anode of the first Zener diode (ZD1) is connected to the second input terminal;
the second functional circuit (200) comprises a second Zener diode (ZD2); and
an anode of the second Zener diode (ZD2) is connected to the cathode of the first Zener diode (ZD1), and a cathode of the second Zener diode (ZD2) is connected to the cathode of the second diode (D2);
the second functional circuit (200) further comprises a fourth diode (D4); and
the anode of the second Zener diode (ZD2) is connected to an anode of the fourth diode (D4), and is connected to the anode of the second diode (D2) by using the fourth diode (D4); and
the boost circuit comprises the inductor (L1).

2. The boost circuit structure according to claim 1, **characterized in that** the branch boost circuit further comprises a first resistor (R1), and the first functional circuit (100) further comprises a second resistor (R2);
the first resistor (R1) is connected to the flying capacitor (C1) in parallel; and
the second resistor (R2) is connected to the first Zener diode (ZD1) in parallel.

3. The boost circuit structure according to claim 2, **characterized in that** the second functional circuit (200) further comprises a third resistor (R3), and the third resistor (R3) is connected to the second diode (D2) in parallel.

4. The boost circuit structure according to claim 1, **characterized in that** the branch boost circuit further comprises a fourth resistor (R4) and a switch (K1), one terminal of the switch (K1) is connected to one terminal of the flying capacitor (C1) by using the fourth resistor (R4), and the other terminal of the switch (K1) is connected to the second input terminal.

5. A photovoltaic power generation system comprising the boost circuit structure according to any one of claims 1 to 4.

## Patentansprüche

1. Boost-Schaltkreisstruktur, **dadurch gekennzeichnet, dass** sie Folgendes umfasst:
einen Schalterschaltkreis, der einen ersten steuerbaren Schalter (T1) und einen zweiten steuerbaren Schalter (T2) umfasst, die in Reihe verbunden sind, wobei ein Anschluss des ersten steuerbaren Schalters (T1) unter Verwendung eines Induktors (L1) mit einem ersten Eingangsanschluss eines Boost-Schaltkreises verbunden ist, wobei der andere Anschluss des ersten steuerbaren Schalters (T1) mit einem Anschluss des zweiten steuerbaren Schalters (T2) verbunden ist, und wobei der andere Anschluss des zweiten steuerbaren Schalters (T2) mit einem zweiten Eingangsanschluss des Boost-Schaltkreises und einem zweiten Ausgangsanschluss des Boost-Schaltkreises verbunden ist;
einen Haupt-Boost-Schaltkreis, der eine erste Diode (D1) und eine zweite Diode (D2) umfasst, wobei eine Anode der ersten Diode (D1) mit dem
einen Anschluss des ersten
steuerbaren Schalters (T1) verbunden ist, wobei eine Kathode der ersten Diode (D1) mit einer Anode der zweiten Diode (D2) verbunden ist, und wobei eine Kathode der zweiten Diode (D2) mit einem ersten Ausgangsanschluss des Boost-Schaltkreises verbunden ist;
einen Zweig-Boost-Schaltkreis, der einen fliegenden Kondensator (C1) umfasst, wobei ein Anschluss des fliegenden Kondensators (C1) mit dem anderen Anschluss des ersten steuerbaren Schalters (T1) verbunden ist, und wobei der andere Anschluss des fliegenden Kondensators (C1) mit der Kathode der ersten Diode (D1) verbunden ist;
einen ersten Funktionsschaltkreis (100), der mit dem fliegenden Kondensator (C1) und dem zweiten Eingangsanschluss verbunden ist und so konfiguriert ist, dass er den fliegenden Kondensator (C1) auflädt, wenn eine Eingangsseite des Boost-Schaltkreises eingeschaltet wird; und
einen zweiten Funktionsschaltkreis (200), der mit dem ersten Funktionsschaltkreis (100) verbunden und parallel mit der zweiten Diode (D2) verbunden und so konfiguriert ist, dass er den fliegenden Kondensator (C1) auflädt, wenn eine Ausgangsseite des Boost-Schaltkreises eingeschaltet wird, wobei
der erste Funktionsschaltkreis (100) eine erste Zenerdiode (ZD1) und eine dritte Diode (D3) umfasst,
wobei eine Kathode der ersten Zenerdiode (ZD1) mit einer Kathode der dritten Diode (D3) verbunden und
mit dem einen Anschluss des fliegenden Kondensators (C1) unter Verwendung der
dritten Diode (D3) verbunden ist, und wobei eine Anode der ersten Zenerdiode (ZD1) mit dem zweiten Eingangsanschluss verbunden ist;
wobei der zweite Funktionsschaltkreis (200) eine zweite Zenerdiode (ZD2) umfasst, und
wobei eine Anode der zweiten Zenerdiode (ZD2) mit der Kathode der ersten Zenerdiode (ZD1) verbunden ist, wobei eine Kathode der zweiten
Zenerdiode (ZD2) mit der Kathode der zweiten Diode (D2) verbunden ist;
wobei der zweite Funktionsschaltkreis (200) ferner eine vierte Diode (D4) umfasst, und
wobei die Anode der zweiten Zenerdiode (ZD2) mit einer Anode der vierten Diode (D4) verbunden und unter Verwendung der vierten Diode (D4) mit der Anode der zweiten Diode (D2) verbunden ist; und
wobei der Boost-Schaltkreis den Induktor (L1) umfasst.

2. Boost-Schaltkreisstruktur nach Anspruch 1, **dadurch gekennzeichnet, dass** der Zweig-Boost-Schaltkreis ferner einen ersten Widerstand (R1) umfasst, wobei der erste Funktionsschaltkreis (100) ferner einen zweiten Widerstand R2 umfasst,
wobei der erste Widerstand (R1) parallel mit dem fliegenden Kondensator C1 verbunden ist, und
wobei der zweite Widerstand (R2) parallel mit der ersten Zenerdiode (ZD1) verbunden ist.

3. Boost-Schaltkreisstruktur nach Anspruch 2, **dadurch gekennzeichnet, dass** der zweite Funktionsschaltkreis (200) ferner einen dritten Widerstand (R3) umfasst, wobei der dritte Widerstand (R3) parallel mit der zweiten Diode (D2) verbunden ist.

4. Boost-Schaltkreisstruktur nach Anspruch 1, **dadurch gekennzeichnet, dass** der Zweig-Boost-Schaltkreis ferner einen vierten Widerstand (R4) und einen Schalter (K1) umfasst, wobei ein Anschluss des Schalters (K1) unter Verwendung des vierten Widerstands (R4) mit einem Anschluss des fliegenden Kondensators (C1) verbunden ist, und wobei der andere Anschluss des Schalters (K1) mit dem zweiten Eingangsanschluss verbunden ist.

5. Photovoltaisches Stromerzeugungssystem, das die Boost-Schaltkreisstruktur gemäß irgendeinem der Ansprüche 1 bis 4 umfasst.

## Revendications

1. Structure de circuit d'amplification, **caractérisée en ce qu'**elle comprend :
un circuit de commutation, comprenant un premier commutateur commandable (T1) et un deuxième commutateur commandable (T2) qui sont connectés en série, dans laquelle une borne du premier commutateur commandable (T1) est connectée à une première borne d'entrée d'un circuit d'amplification à l'aide d'un inducteur (L1), l'autre borne du premier commutateur commandable (T1) est connectée à une borne du deuxième commutateur commandable (T2), et l'autre borne du deuxième commutateur commandable (T2) est connectée à une deuxième borne d'entrée du circuit d'amplification et à une deuxième borne de sortie du circuit d'amplification ;
un circuit d'amplification principal, comprenant une première diode (D1) et une deuxième diode (D2), dans laquelle une anode de la première diode (D1) est connectée à ladite
borne du premier
commutateur commandable (T1), une cathode de la première diode (D1) est connectée à une anode de la deuxième diode (D2), et une cathode de la deuxième diode (D2) est connectée à une première borne de sortie du circuit d'amplification ;
un circuit d'amplification de dérivation, comprenant un condensateur volant (C1), dans laquelle une borne du condensateur volant (C1) est connectée à l'autre borne du premier commutateur commandable (T1), et l'autre borne du condensateur volant (C1) est connectée à la cathode de la première diode (D1);
un premier circuit fonctionnel (100), connecté au condensateur volant (C1) et à la deuxième borne d'entrée, et configuré pour charger le condensateur volant (C1) lorsqu'un côté entrée du circuit d'amplification est mis sous tension ; et
un deuxième circuit fonctionnel (200), connecté au premier circuit fonctionnel (100) et connecté à la deuxième diode (D2) en parallèle, et configuré pour charger le condensateur volant (C1) lorsqu'un côté sortie du circuit d'amplification est mis sous tension, dans laquelle
le premier circuit fonctionnel (100) comprend une première diode Zener (ZD1) et une troisième diode (D3) ;
une cathode de la première diode Zener (ZD1) est connectée à une cathode de la troisième diode (D3), et est connectée à ladite
borne du condensateur volant (C1) à l'aide de la
troisième diode (D3), et une anode de la première diode Zener (ZD1) est connectée à la deuxième borne d'entrée ;
le deuxième circuit fonctionnel (200) comprend une deuxième diode Zener (ZD2) ; et
une anode de la deuxième diode Zener (ZD2) est connectée à la cathode de la première diode Zener (ZD1), et une cathode de la deuxième
diode Zener (ZD2) est connectée à la cathode de la deuxième diode (D2) ;
le deuxième circuit fonctionnel (200) comprend en outre une quatrième diode (D4) ; et
l'anode de la deuxième diode Zener (ZD2) est connectée à une anode de la quatrième diode (D4), et est connectée à l'anode de la deuxième diode (D2) à l'aide de la quatrième diode (D4) ; et
le circuit d'amplification comprend l'inducteur (L1).

2. Structure de circuit d'amplification selon la revendication 1, **caractérisée en ce que** le circuit d'amplification de dérivation comprend en outre une première résistance (R1), et le premier circuit fonctionnel (100) comprend en outre une deuxième résistance (R2) ;
la première résistance (R1) est connectée au condensateur volant (C1) en parallèle ; et
la deuxième résistance (R2) est connectée à la première diode Zener (ZD1) en parallèle.

3. Structure de circuit d'amplification selon la revendication 2, **caractérisée en ce que** le deuxième circuit fonctionnel (200) comprend en outre une troisième résistance (R3), et la troisième résistance (R3) est connectée à la deuxième diode (D2) en parallèle.

4. Structure de circuit d'amplification selon la revendication 1, **caractérisée en ce que** le circuit d'amplification de dérivation comprend en outre une quatrième résistance (R4) et un commutateur (K1), une borne du commutateur (K1) est connectée à une borne du condensateur volant (C1) à l'aide de la quatrième résistance (R4), et l'autre borne du commutateur (K1) est connectée à la deuxième borne d'entrée.

5. Système de génération de puissance photovoltaïque comprenant la structure de circuit d'amplification selon l'une quelconque des revendications 1 à 4.
